Europäisches Patentamt

European Patent Office

Office européen des brevets

(11) Publication number: **0 280 399 B1**

# EUROPEAN PATENT SPECIFICATION

(45) Date of publication of patent specification: **07.10.92**　(51) Int. Cl.5: **A01B 29/04**

(21) Application number: **88300587.8**

(22) Date of filing: **25.01.88**

Divisional application 91116885.4 filed on 25/01/88.

(54) **Coil apparatus.**

(30) Priority: **26.01.87 GB 8701606**

(43) Date of publication of application:
**31.08.88 Bulletin 88/35**

(45) Publication of the grant of the patent:
**07.10.92 Bulletin 92/41**

(84) Designated Contracting States:
**AT BE CH DE ES FR GB IT LI NL SE**

(56) References cited:
**EP-A- 0 011 732
US-A- 2 261 893
US-A- 2 300 851**

(73) Proprietor: **FLEXI-COIL (UK) LIMITED
Seaton Ross
York YO4 4NF(GB)**

(72) Inventor: **Bradley, John
The White House, New Street
Pocklington, York(GB)**
Inventor: **Thirtle, Philip John
The Deed, High Offley Road
Woodseaves, Stafford ST20 0LG(GB)**

(74) Representative: **Laight, Martin Harvey
W.H. Beck, Greener & Co. 7 Stone Buildings
Lincoln's Inn
London WC2A 3SZ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an earth working apparatus.

A number of forms of apparatus used for earth working include an elongate helical coil mounted on a frame for rotation about the longitudinal axis of the coil relative to the frame. In operation the coil rotates about a substantially horizontal axis by the effect of contact of the earth with the coil when the coil is dragged across the ground, for example by a tractor. The rotation of the coil may be used for example for crumbling the earth to provide a seed bed, or the apparatus may be used as a plough packer for consolidating the land after ploughing, again to provide a seed bed.

A difficulty with such coils is that in wet conditions earth clings to the coils, blocking the coils and reducing efficiency of operation. Previously known attempts to clean such a coil have been made by providing a fixed scraper bar parallel to the axis of the coil and positioned close to the periphery of the coil, so as to scrape off excess earth. However such attempts have been unsuccessful in adequately cleaning the helical turns of the coil.

US-A-2,300,851 (Wolfard) discloses an earth working apparatus comprising a frame for movement over the ground, an elongate earth working rotary member mounted on the frame for rotation about the longitudinal axis of the rotary member in contact with the earth for the purposes of earth working, said rotary member having spaces on its outer surface, and means for cleaning the earth working rotary member, the cleaning means comprising a plurality of rotatable cleaning rotors each having outwardly projecting portions for projecting into said spaces of the rotary member to clean said rotary member. In this apparatus the rotary member is a horizontal cylinder bearing a series of helical grooves about its outer surface to provide said spaces.

In this known apparatus, the grooves of the earth working cylinder are cleaned by an array of petalled wheels which mesh with the grooves in the cylinder, and appear to clean the cylinder by the tips of the petals digging dirt out of the grooves in the cylinder. Rotation of the grooved cylinder forces the petalled wheels to rotate by the effect of the grooves on the tips of the petals. However, cleaning of the cylinder is additionally effected by causing it to mesh with a second, similar cylinder.

Other prior art which discloses means for cleaning earth working implements comprises US-A-396170 (Newson) US-A-2,261,893 (Wolfard) and US-A-1,237,446 (Arce).

It is an object of the present invention to provide means for cleaning an elongate helical coil in an earth working apparatus, particularly when operating in wet conditions, when the earth clings to the coil to an extent much greater than is the case with a simple grooved cylinder.

According to the present invention there is provided an earth working apparatus as defined above, and characterised in that said earth working rotary member comprises an elongate helical coil, said spaces on the outer surface thereof being defined between turns of the coil, in that each said cleaning rotor is rotatable about an axis transverse to the axis of the helical coil, and in that the outwardly projecting portions of each cleaning rotor protrude into said spaces between turns of the coil such that the sides of the projecting portions scrape across the sides of the turns of the coil during its rotation to thereby clean the coil.

In an embodiment, said cleaning rotors are arranged such that said projecting portions are generally substantially level with or below the level of a central diametral plane of said coil which extends substantially at right angles to the axes of the rotors.

Preferably, the said projecting portions of each cleaning rotor comprise outwardly projecting arms arranged such that the only contact between the cleaning rotor and the coil is contact between a side of an arm and the coil.

Preferably, each projecting portion extends sufficiently to protrude through a space between two adjacent turns of the coil beyond the inner edges of the coil turns. Such an arrangement allows thorough cleaning of the coil by a side of an arm scraping against the side edge of a turn of the coil, and by the projecting arm passing through the turn of the coil and thoroughly cleaning earth clinging to the coil.

In a preferred form, each cleaning rotor has four outwardly projecting portions positioned symmetrically about the axis of the cleaning rotor. Preferably each projecting portion has a main portion with side edges converging towards each other in the outward direction, and a shorter, tip portion, with side edges converging towards each other more rapidly than the convergence of the main portion.

In one preferred form, each projecting portion of a cleaning rotor is inclined relative to a plane perpendicular to the axis of rotation of the cleaning rotor. For example, said plane may be the central diametral plane of said helical coil extending at right angles to the axes of the rotors. Preferably the cleaning rotors are positioned in a substantially horizontal array when the apparatus is standing on horizontal ground, and each projecting portion is inclined downwardly when protruding into a space between turns of the coil.

The outwardly projecting portions of each cleaning rotor may project outwardly in a radial direction, or in some arrangements may project along an axis off-set slightly from the radial position.

Although it is possible for the cleaning rotors to be driven in movement by drive means independent of the helical coil, it is presently preferred that the said projecting portions of the cleaning rotors are moveable by the effect of contact of the projecting portions with the helical coil. For example, each cleaning rotor is preferably itself freely rotatable about its axis of rotation, and, in operation, is rotated by the effect of turns of the helical coil on the projecting portions thereof.

It is also preferred that the earth working coil is driven in rotation by the effect of contact with the ground as the coil is moved over the earth. Thus, at least in preferred embodiments of the invention, there may be provided a cleaning system for an earth working coil which is powered entirely by the movement of the earth working helical coil over the ground, and which allows thorough cleaning of the earth working coil by the protrusion of portions of the cleaning rotors into the spaces between the turns of the coil, by a scraping action due to direct contact of the cleaning rotors against the turns of the earth working coil.

Embodiments of the invention will now be described, by way of example, with reference to the accompanying drawings, in which:-

Figure 1 is a diagrammatic plan view of an earth working apparatus embodying the invention;

Figure 2 is a diagrammatic side view of the apparatus of Figure 1;

Figure 3 shows in plan view a preferred alternative shape of cleaning rotor for use in an embodiment of the invention, and Figures 3a and 3b show sections along the lines AA and BB in Figure 3 respectively;

Figure 4 is a diagrammatic representation in plan view of an earth-working apparatus embodying the invention and including cleaning rotors as shown in Figures 3, 3a and 3b, and Figure 4a shows the alternative cleaning rotors mounted on the apparatus of Figure 1; and

Figure 5 is a diagrammatic side view of the apparatus of Figure 4.

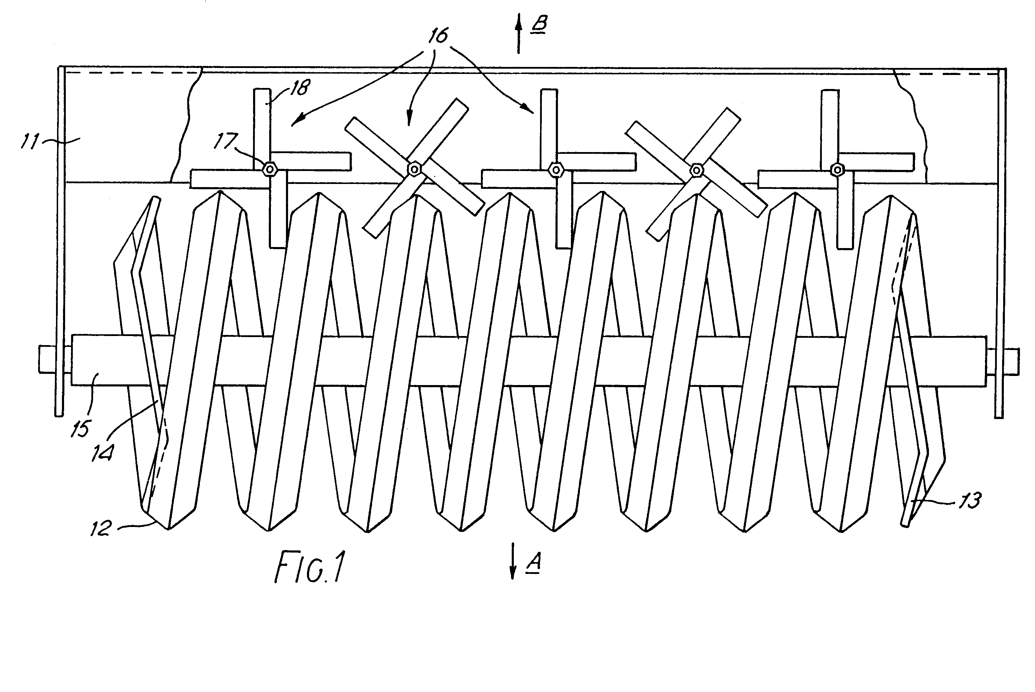

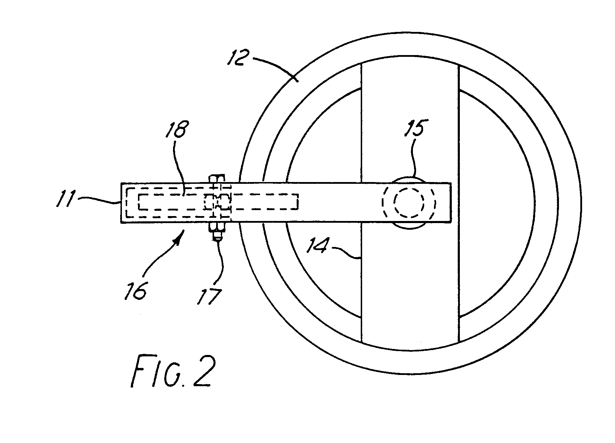

Referring to Figures 1 and 2, an earth working apparatus includes a movable frame 11 arranged to be mounted on a vehicle, for example at the rear of a tractor, for movement over the land in the direction A or the direction B as indicated by arrows in Figure 1. The preferred direction of movement is direction A but the positioning of the moving components is that which would arise for movement in the direction B.

A helical coil 12 is mounted by end plates 13 and 14 on a central core 15 which is journalled for rotation about the axis of the coil 12. The coil 12 may be of conventional design, for example a 1.5 inch square steel bar wound along a helix having a pitch of 5.5 inches. In operation the coil 12 is rotated by the effect of the coil being dragged over the ground by the tractor.

Mounted on the frame 11 is an array of cleaning rotors 16 each of which is rotatable about a respective bolt 17 by which the rotor is mounted on the frame 11. Each rotor 16 comprises four arms 18 extending outwardly from the bolt 17, but off-set slightly from the radial position, so as to be substantially tangential to the axis of rotation of the rotor.

Each rotor 16 is freely rotatable on its bolt 17, and the arms 18 protrude into the spaces between turns of the helical coil 12. It will be seen from Figure 2 that the arms 18 are, in general, substantially at the same level as the horizontally extending, central diametral plane of the coil 12 which is substantially at right angles to its rotation axis.

In operation, rotation of the helical coil 12 causes the turns of the coil 12 to make contact with the arms 18 of the rotors 16, and the coil is cleaned by the scraping action of the arms 18 on the sides of the turns of the coil 12. As the coil 12 rotates in effect the spaces between the turns of the coil move longitudinally along the coil, and the rotors 16 are rotated by the effect of contact of the turns of the coil 12 on the arms 18.

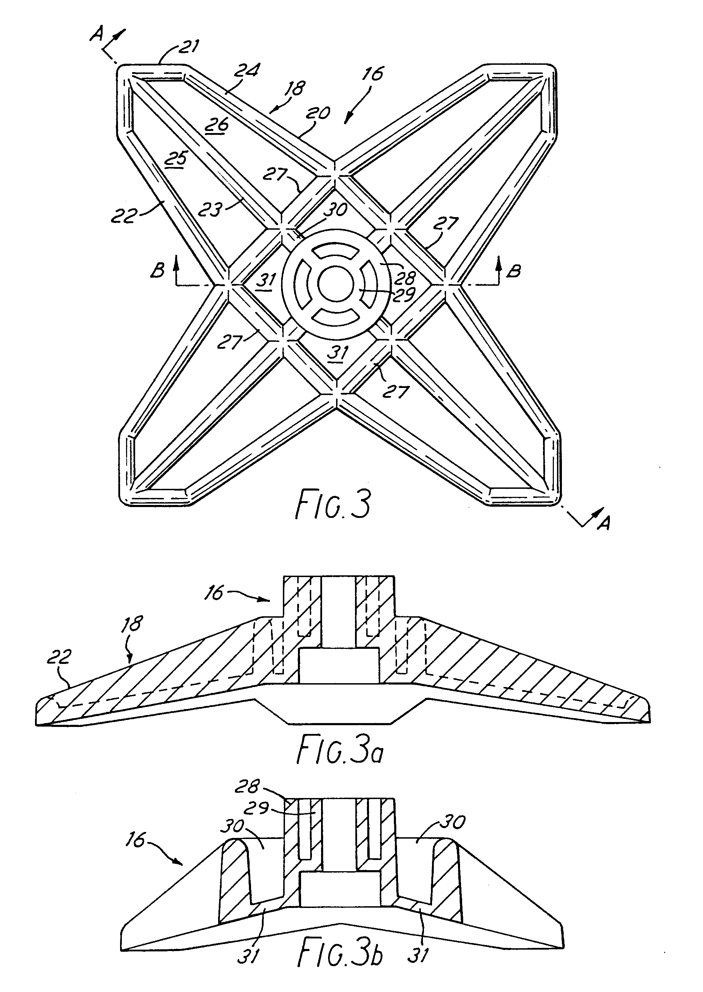

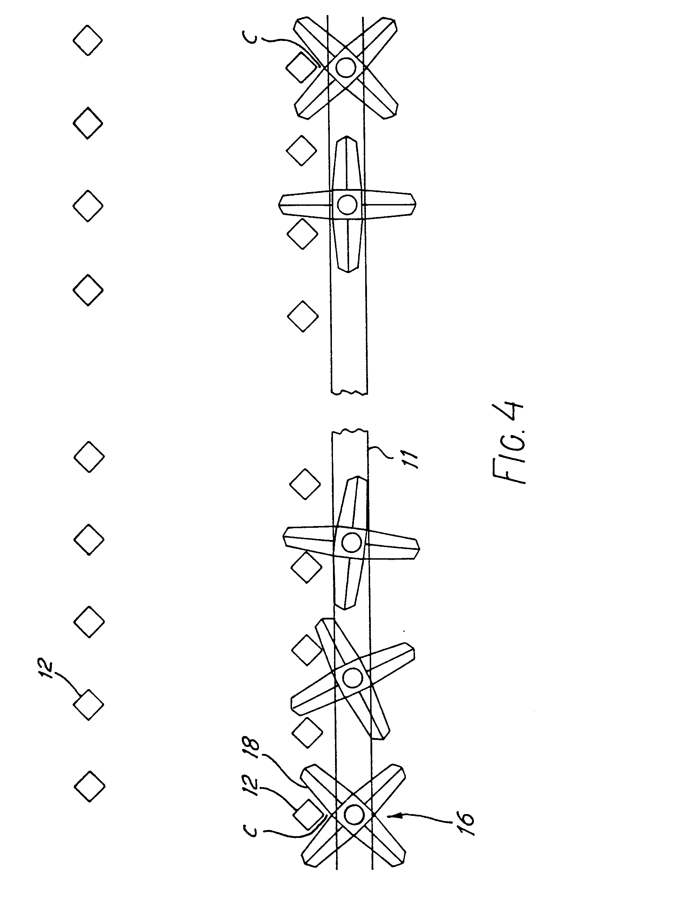

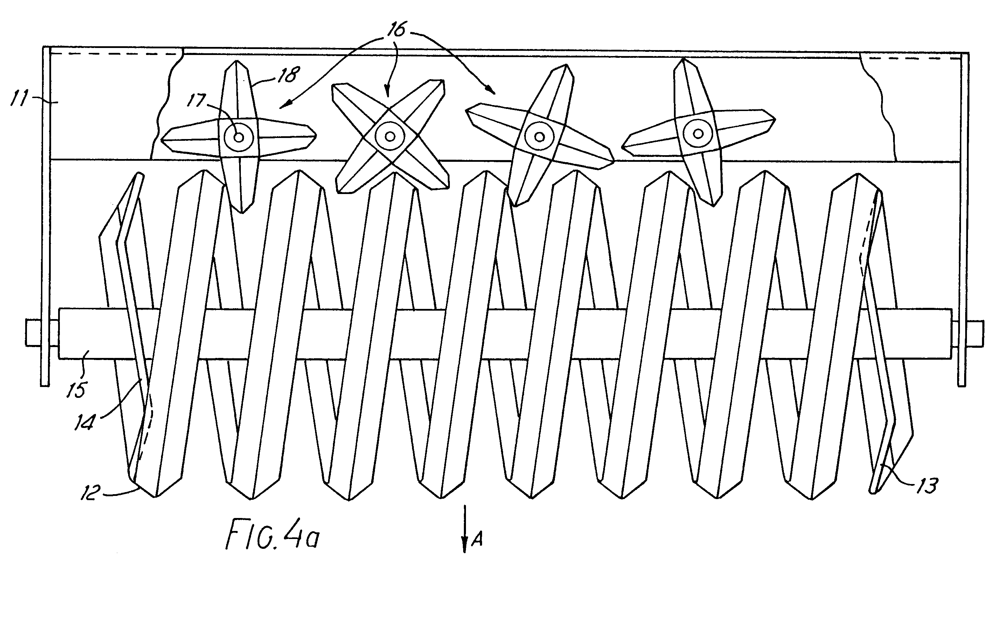

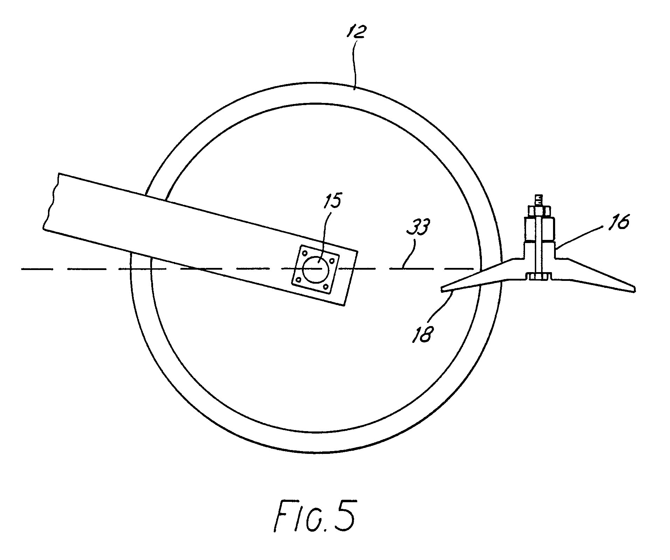

In Figures 3, 3a and 3b there is shown in plan and in two sections respectively an alternative preferred form of cleaning rotor 16, which may be used in place of the cleaning rotor 16 in Figures 1 and 2. Figures 4 and 5 correspond to previous Figures 1 and 2, and like components are indicated by like reference numerals. In general the description given with regard to Figures 1 and 2 applies also to Figures 4 and 5.

As shown in Figure 3, the preferred form of cleaning rotor 16 has four arms 18 projecting outwardly from the axis of rotation of the rotor 16 in radial directions. Each arm 18 has a main portion 20 with sides which converge in the outward direction, and a tip portion 21 which is shorter than the main portion 20, and which has converging sides which converge more rapidly than the convergence of the main portion 20. As shown in Figure 3a, each arm 18 is inclined to a plane perpendicular to the axis of rotation of the rotor, and as shown in Figure 5, each arm is inclined downwardly when the rotors are arranged in a horizontal array behind the cleaning coil.

As shown in Figures 3, 3a and 3b, each arm 18 has three deep raised ribs 22, 23 and 24, linked by flat webs 25 and 26. The ribs 22 and 24 run along the edges of the arm 18, and the rib 23 is a central rib of the arm. A central core of the rotor 16 comprises a square arrangement of similar ribs 27 with an inner strengthened bearing portion of two cylindrical ribs 28 and 29. The core ribs 27, 28 and 29 are linked by cross ribs 30 and webs 31. The shape of rotor 16 shown in Figures 3, 3a and 3b, is suitable for manufacture from synthetic plastics material, the ribs giving sufficient strength for the cleaning purpose.

Referring to Figure 4, the rotors 16 are mounted on a transverse frame 11 and are adjusted, for example, to give a clearance of 8mm between the outermost edge of the coil 12 and the junction of two arms 18, as shown at C in Figure 4. As shown in Figure 5, the rotors 16 are positioned so that a line 33 drawn substantially through the centre of the core of the rotor 16 projects through the axle 15 of the coil 12. It will be appreciated that the central diametral plane of the coil 12 can be represented by the line 33, and it will be seen that the arms 18 are generally below the level of the plane.

In operation the rotation of the coil 12 brings the side of one arm of each rotor 16 into contact with a side of a turn of the coil 12. Each arm 18 is narrower than the distance between adjacent turns of the coil 12, so that only one side of each coil turn contacts only one side of an arm 18 of a rotor 16. As the coil turn 12 moves longitudinally along the axial direction of the coil, a particularly effective scraping action takes place between the side of the protruding arm 18, and the turn of the coil 12. Each arm 18 extends sufficiently to protrude through the space between two adjacent turns of the coil 12 beyond the inner edge of the coil turns, when it is penetrating to its greatest extent. This protrusion of the arm through the coil, rather than just into the space between the turns, is a particularly effective in loosening of soil which is clogging the coil.

By way of example (as shown in Figures 4 and 5) each rotor may have a diameter of 228mm (9 inches) and may be made of self-lubricating polypropelene. The cleaning rotors 16 may be mounted beneath a length of box sectioned steel positioned at the rear and running the full length of the coil 12. There may be approximately four cleaning rotors per meter of coil. As the coil 12 rotates in moving across the earth, the rotors 16 automatically revolve in time with the coil and scrape off any clinging soil. The shape of the cleaning rotors enables the arms to project into the coil and clean inside as well as outside. Although the tips of the arms effect some cleaning within the coil, the primary effect of the cleaning rotors is that the sides of the arms clean the turns of the coil by a sliding and scraping action.

Another arrangement is shown in Figure 4a, where the cleaning rotors of Figures 3, 3a and 3b, are mounted on the apparatus previously described with reference to Figures 1 and 2. The positions of the cleaning rotor correspond to movement in the direction A.

**Claims**

1. An earth working apparatus comprising a frame (11) for movement over the ground, an elongate earth working rotary member (12) mounted on the frame (11) for rotation about the longitudinal axis of the rotary member (12) in contact with the earth for the purposes of earth working, said rotary member (12) having spaces on its outer surface, and means (16) for cleaning the earth working rotary member (12), the cleaning means comprising a plurality of rotatable cleaning rotors (16) each having outwardly projecting portions (18) for projecting into said spaces of the rotary member, characterised in that said earth working rotary member comprises an elongate helical coil (12), said spaces on the outer surface thereof being defined between turns of the coil (12), in that each said cleaning rotor (16) is rotatable about an axis transverse to the axis of the helical coil (12), and in that the outwardly projecting portions (18) of each cleaning rotor (16) protrude into said spaces between turns of the coil (12) such that the sides of the projecting portions (18) scrape across the sides of the turns of the coil (12) during its rotation to thereby clean the coil (12).

2. Apparatus as claimed in Claim 1, wherein said cleaning rotors (16) are arranged such that said projecting portions (18) are generally substantially level with or below the level of a central diametral plane (33) of said coil (12) which extends substantially at right angles to the axes of the rotors (16).

3. Apparatus as claimed in Claim 1 or 2, in which the said projecting portions (18) of each cleaning rotor (16) comprise outwardly projecting arms (18) arranged such that the only contact between the cleaning rotor (16) and the coil (12) is contact between a side of an arm (18) and the coil (12).

4. Apparatus as claimed in any preceding claim, in which each projecting portion (18) extends sufficiently to protrude through a space between two adjacent turns of the coil (12) beyond the inner edges of the coil turns.

5. Apparatus as claimed in any preceding claim, in which each cleaning rotor (16) has four outwardly projecting portions (18) positioned symmetrically about the axis of the cleaning rotor.

6. Apparatus as claimed in any preceding claim in which each projecting portion (18) has a main portion with side edges converging towards each other in the outward direction, and a shorter tip portion with side edges converging towards each other more rapidly than the convergence of the main portion.

7. Apparatus as claimed in any preceding claim in which each projecting portion (18) of a cleaning rotor (16) is inclined relative to a plane perpendicular to the axis of rotation of the cleaning rotor (16).

8. Apparatus as claimed in Claim 7 in which the cleaning rotors (16) are positioned in a substantially horizontal array when the apparatus is standing on horizontal ground, and each projecting portion (18) is inclined downwardly when protruding into a space between turns of the coil (12).

**Patentansprüche**

1. Bodenbearbeitungsvorrichtung mit einem Rahmen (11) zur Fortbewegung über den Boden, mit einem länglichen, drehenden Teil (12), das am Rahmen (11) befestigt ist und das sich bei der Bodenbearbeitung durch Kontakt mit dem Boden um seine Längsachse dreht, wobei das drehende Teil (12) Vertiefungen in seiner Außenoberfläche aufweist, und mit einer Vorrichtung (16) zum Reinigen des drehenden Teils (12), wobei die Reinigungsvorrichtung mehrere drehbare Reinigungsrotoren (16) aufweist, die nach außen abstehende Bereiche (18) aufweisen, die in die Vertiefungen im drehenden Teil (12) hineinragen, dadurch gekennzeichnet, daß das drehende Teil eine längliche Wendel (12) aufweist, deren Windungen die Vertiefungen in der Außenoberfläche zwischen sich bilden, daß jeder Reinigungsrotor (16) um eine quer zur Achse der Wendel (12) gerichtete Achse drehbar ist, und daß die nach außen abstehenden Bereiche (18) jedes Reinigungsrotors (16) in die Vertiefungen zwischen den Windungen der Wendel (12) ragen, so daß die Seiten der nach außen abstehenden Bereiche (18) während der Drehung über die Seiten der Windungen der Wendel (12) schaben um die Wendel (12) zu reinigen.

2. Vorrichtung nach Anspruch 1, dadurch gekennzeichnet, daß die Reinigungsrotoren (16) so angeordnet sind, daß sich die nach außen abstehenden Bereiche (18) im wesentlichen in oder unterhalb einer Ebene (33) befinden, die durch die Achse der Wendel (12) verläuft und die mit den Achsen der Reinigungsrotoren (16) ungefähr einen rechten Winkel bildet.

3. Vorrichtung nach Anspruch 1 oder 2, dadurch gekennzeichnet, daß die abstehenden Bereiche (18) jedes Reinigungsrotors (16) nach außen abstehende Arme (18) aufweisen, die so angeordnet sind, daß die einzige Berührung zwischen Reinigungsrotor (16) und Wendel (12) eine Berührung an der Seite eines Arms (18) und der Wendel (12) ist.

4. Vorrichtung nach einem der vorhergehenden Ansprüche, dadurch gekennzeichnet, daß jeder abstehende Bereich (18) tiefer als die Innenränder der Windungen der Wendel (12) in eine Vertiefung zwischen zwei benachbarten Windungen der Wendel (12) hineinragt

5. Vorrichtung nach einem der vorhergehenden Ansprüche, dadurch gekennzeichnet, daß jeder Reinigungsrotor (16) vier nach außen abstehende Bereiche (18) aufweist, die symmetrisch zur Achse des Reinigungsrotors (16) angeordnet sind.

6. Vorrichtung nach einem der vorhergehenden Ansprüche, dadurch gekennzeichnet, daß jeder abstehende Bereich (18) einen Hauptbereich, dessen Seiten nach außen zueinander konvergieren, und einen kürzeren Endbereich, dessen Seiten stärker zueinander konvergieren als im Hauptbereich, aufweist.

7. Vorrichtung nach einem der vorhergehenden Ansprüche, dadurch gekennzeichnet, daß jeder abstehende Bereich (18) eines Reinigungsrotors (16) zu einer senkrecht zur Drehachse des Reingungsrotors (16) stehenden Ebene geneigt ist.

8. Vorrichtung nach Anspruch 7, dadurch gekennzeichnet, daß die Reinigungsrotoren (16) ungefähr horizontal angeordnet sind, wenn sich die Vorrichtung auf horizontalem Boden befindet, und daß jeder abstehende Bereich (18) nach unten geneigt ist, wenn er in eine Vertiefung zwischen Windungen der Wendel (12) hineinragt.

**Revendications**

1. Appareil pour travailler la terre comprenant un châssis (11) destiné à être déplacé sur le sol, un élément tournant allongé (12) de travail de la terre, monté sur le châssis (11) pour tourner autour de l'axe longitudinal de l'élément tournant (12), en contact avec la terre dans le but de travailler celle-ci, ledit élément tournant (12) comportant des espaces sur sa surface extérieure, et des moyens (16) pour nettoyer l'élément tournant (12) de travail de la terre, les moyens de nettoyage comprenant une pluralité de rotors de nettoyage (16) pouvant tourner et ayant chacun des parties (18) en saillie vers l'extérieur destinées à s'engager à l'intérieur desdits espaces de l'élément tournant, caractérisé en ce que ledit élément tournant de travail de la terre comprend un enroulemnt hélicoïdal allongé (12), lesdits espaces sur la surface extérieure de celui-ci étant définis entre les spires de l'enroulement (12), en ce que chacun desdits rotors de nettoyage (16) peut tourner autour d'un axe transversal par rapport à l'axe de l'enroulement hélicoïdal (12) et en ce que les parties saillantes (18) de chacun des rotors de nettoyage (16) pénètrent lesdits espaces entre les spires de l'enroulement (12), de manière à ce que les côtés des parties saillantes (18) raclent les côtés des spires de l'enroulement (12) pendant sa rotation en nettoyant par ce moyen l'enroulement (12).

2. Appareil selon la revendication 1, dans lequel lesdits rotors de nettoyage (16) sont agencés de manière à ce que lesdites parties saillantes (18) soient pratiquement globalement de niveau avec, ou situées au-dessous du niveau d'un plan diamétral central (33) dudit enroulement (12) qui s'étend sensiblement à angle droit par rapport aux axes des rotors (16).

3. Appareil selon la revendication 1 ou 2, dans lequel lesdites parties saillantes (18) de chacun des rotors de nettoyage (16) comprennent des bras (18) en saillie vers l'extérieur, agencés de manière à ce que le seul contact entre le rotor de nettoyage (16) et l'enroulement (12) soit le contact entre un côté d'un bras (18) et l'enroulement (12).

4. Appareil selon l'une quelconque des revendications précédentes, dans lequel chaque partie saillante (18) s'étend de manière suffisante pour traverser un espace entre deux spires adjacentes de l'enroulement (12) et aller au-delà des bords intérieurs des spires d'enroulement.

5. Appareil selon l'une quelconque des revendications précédentes, dans lequel chaque rotor de nettoyage (16) comporte quatre parties saillantes (18) situées de manière symétrique autour de l'axe du rotor de nettoyage.

6. Appareil selon l'une quelconque des revendications précédentes, dans lequel chaque partie saillante (18) possède une partie principale ayant des bords latéraux qui convergent en direction l'un de l'autre vers l'extérieur, et une partie de pointe, plus courte, ayant des bords latéraux qui convergent en direction l'un de l'autre plus rapidement que la convergence de la partie principale.

7. Appareil selon l'une quelconque des revendications précédentes, dans lequel chaque partie saillante (18) d'un rotor de nettoyage (16) est inclinée par rapport à un plan perpendiculaire à l'axe de rotation du rotor de nettoyage (16).

8. Appareil selon la revendication 7, dans lequel les rotors de nettoyage (16) sont placés en une rangée sensiblement horizontale lorsque l'appareil se tient sur un sol horizontal, chacune des parties saillantes (18) étant inclinée vers le bas lorsqu'elle fait saillie dans l'espace situé entre les spires de l'enroulement (12).

FIG.1

EP 0 280 399 B1

FIG. 2

FIG.3

FIG.3a

FIG.3b

9

EP 0 280 399 B1

FIG.4

FIG.4a

FIG.5